Europäisches Patentamt

European Patent Office

Office européen des brevets

(19)

(11) Veröffentlichungsnummer: **0 027 879**
**B1**

(12) # EUROPÄISCHE PATENTSCHRIFT

(45) Veröffentlichungstag der Patentschrift:
10.07.85

(21) Anmeldenummer: 80105361.2

(22) Anmeldetag: 08.09.80

(51) Int. Cl.⁴: **B 62 D  33/02, E 05 C  3/08**

(54) **Langwegverschluss für abklappbare und auspendelbare Bordwände.**

(30) Priorität: 10.09.79  DE 2936528

(43) Veröffentlichungstag der Anmeldung:
06.05.81 Patentblatt 81/18

(45) Bekanntmachung des Hinweises auf die Patenterteilung:
10.07.85 Patentblatt 85/28

(84) Benannte Vertragsstaaten:
**DE FR GB IT**

(56) Entgegenhaltungen:
**EP - A - 0 001 112
AT - A - 325 430
DE - A - 1 580 650
DE - A - 2 527 032
DE - A - 2 740 573
DE - U - 7 628 922
US - A - 4 159 137**

(73) Patentinhaber: **F. HESTERBERG & SÖHNE GmbH & Co.
KG, Hellenbecker Strasse 50-60,
D-5828 Ennepetal 1 (DE)**

(72) Erfinder: **Friedhelm, Nieland, Bonkampstrasse 40,
D-5805 Brekerfeld (DE)**

(74) Vertreter: **Kneissl, Richard, Dr., Patentanwälte Andrae,
Flach, Haug, Kneissl Steinstrasse 44,
D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft einen Langwegverschluß für abklappbare und auspendelbare Bordwände von Lastfahrzeugen zum Anbringen an ein festes Aufbauelement, mit einem ein Fangmaul und eine Schließschwinge aufweisenden Oberteil und mit einem einen schwenkbar gelagerten Handhebel aufweisenden Unterteil, wobei der Betätigungsmechanismus mit dem Handhebel über eine Betätigungsstange verbunden ist und wobei in Schließstellung sich die Anlenkstelle der Betätigungsstange am Handhebel bezüglich dessen Anlenkstelle am Unterteil in einer Übertotpunktlage befindet.

Ein Langwegverschluß dieser Art ist aus der DE-A-2 740 573 bekannt. Bei diesem Langwegverschluß besteht der Betätigungsmechanismus für die Schließschwinge aus einem Winkelstück, das im Bereich seines Knies schwenkbar im Oberteil gelagert ist und an dessen einem Schenkel die Betätigungsstange angreift. Das Ende des anderen Schenkels weist eine Abrollkurve auf, die beim Schließvorgang in Anlage an eine an der Schließschwinge befestigte Rolle kommt, die im weiteren Verlauf des Schließvorgangs auf dieser Kurve abrollt. Das Winkelstück besitzt außerdem eine Nase, die beim Absenken der Betätigungsstange an eine entsprechende Nase an der Schließschwinge in Anlage kommt und diese in die Öffnungsstellung drückt.

Ein wesentlicher Nachteil dieses Verschlusses besteht darin, daß der Betätigungsmechanismus verhältnismäßig kompliziert ist und außerdem einem starken Verschleiß unterliegt. Dies kommt daher, daß in der Praxis Schmutz in den Betätigungsmechanismus gelangt, wodurch die aufeinandergleitenden beziehungsweise -rollenden Teile stark abgenutzt werden.

Der Erfindung lag demgegenüber die Aufgabe zugrunde, einen Langwegverschluß der eingangs bezeichneten Art so weiter zu bilden, daß er diese Nachteile nicht aufweist.

Die Aufgabe wird gemäß der Erfindung dadurch gelöst, daß bei einem eingangs beschriebenen Langwegverschluß der Betätigungsmechanismus aus einem einerseits am Oberteil im Bereich der Grundplatte desselben und andererseits an der Schließschwinge angelenkten Kniehebel besteht, an dessen Kniegelenk die Betätigungsstange angreift, wobei in der Schließstellung das Kniegelenk sich in einer Übertotpunktlage befindet und an einem Anschlag anliegt.

Die Verwendung eines Kniehebels zur Betätigung der Schließschwinge lag nicht nahe und gelingt erfindungsgemäß nur dadurch, daß der Kniehebel mit seinem einen Ende ganz in der Nähe der Grundplatte angelenkt wird. Nur dadurch ist es möglich, die Betätigungsstange am Kniegelenk angreifen zu lassen.

Dadurch, daß beim erfindungsgemäßen Langwegverschluß die beweglichen Teile nur über Achsen miteinander verbunden sind und Gleitflächen oder Abrollflächen ganz fehlen, unterliegt der erfindungsgemäße Verschluß praktisch keiner Abnutzung, da Schmutz in Achsenlager kaum eindringen kann. Ein besonderer Vorzug des erfindungsgemäßen Langwegverschlusses ist darin zu sehen, daß die Schließschwinge durch einen doppelten Totpunktüberzug gesichert ist, und zwar zum einen durch das durchgedrückte Kniegelenk des Kniehebels und zum anderen durch den Totpunktüberzug im Handhebel.

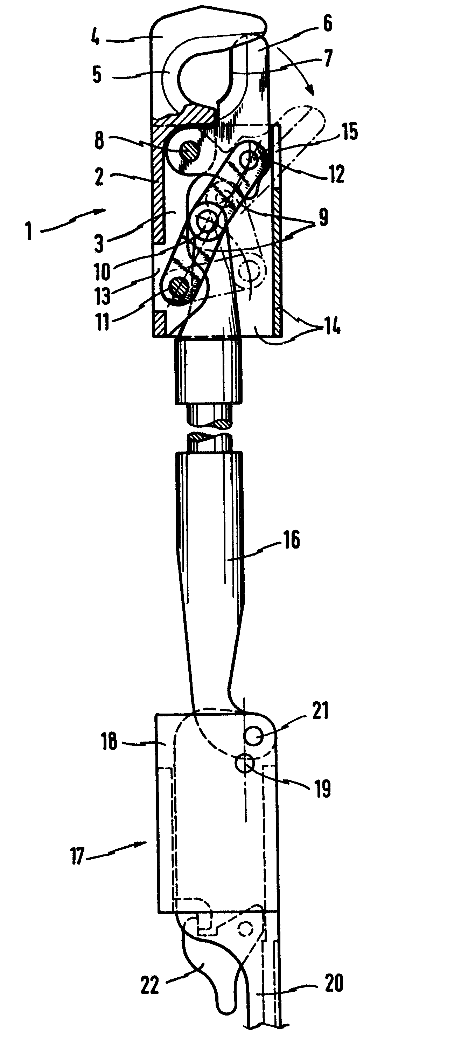

Eine Ausführungsform eines erfindungsgemäßen Langwegverschlusses wird nun anhand der Zeichnung näher erläutert.

Der dargestellte Verschluß besitzt ein Oberteil 1, welches aus einer Grundplatte 2 mit seitlich abstehenden und parallel zueinander verlaufenden Seitenwandungen 3 gebildet ist. Die Grundplatte 2 und die Seitenwandungen 3 gehen an der Oberseite in ein Fangmaul 4 für einen an der Bordwand anzubringenden Pendelzapfen über. Das Fangmaul 4 ist mit einer Anschrägung 5 zur Erleichterung des Einfangens des Pendelzapfens ausgerüstet. Eine Schließschwinge 6, die ebenfalls eine Anschrägung 7 zur Erleichterung des Einfangens des Pendelzapfens aufweist, ist mittels einer Achse 8 schwenkbar im Oberteil 1 gelagert. Ein Kniehebel 9 mit einem Kniegelenk 10 ist einerseits mit einer Achse 11 in den Seitenwandungen 3 und andererseits mit einer Achse 12 an der Schließschwinge 6 angelenkt. Die Grundplatte 2 besitzt eine Ausnehmung 13, damit die Achse 11 soweit wie möglich an die Grundplatte herangerückt werden kann. Die Kniegelenkachse 10 springt an beiden Seiten etwas über den Kniehebel vor. Diese Vorsprünge liegen in Schließstellung an den Stirnseiten der Wandungen 3 an. Der ganze Mechanismus ist durch eine U-förmige Haube 14 abgedeckt. Die Haube besitzt an ihrer Vorderseite eine Ausnehmung 15, damit die Schließschwinge 6 ausschwingen kann.

Am Kniegelenk 10 des Oberteils 1 ist eine Betätigungsstange 16 angelenkt und mit einem Unterteil 17 verbunden. Das Unterteil 17 besteht aus einem vorne offenen U-förmigen Profil 18, in dem über eine Achse 19 eine Handhabe 20 angelenkt ist. Oberhalb der Achse 19 ist die Betätigungsstange 16 über eine Achse 21 an der Handhabe 20 angelenkt. Die Handhabe ist in der Schließstellung durch einen Einrastmechanismus 22 gesichert. Die Schließstellung des erfindungsgemäßen Verschlusses ist nicht nur durch den Einrastmechanismus 22 gesichert, sondern noch weitere zwei Mal durch jeweils einen Totpunktüberzug im Oberteil 1 und im Unterteil 17. In dieser Stellung ist nämlich sowohl das Kniegelenk 10 im Oberteil 1 als auch die Achse 21 im Unterteil 17 in einer Übertotpunktlage, so daß die Schließstellung bei der dargestellten Ausführungsform insgesamt dreifach gesichert ist.

## Patentanspruch

Langwegverschluß für abklappbare und auspendelbare Bordwände von Lastfahrzeugen zum Anbringen an ein festes Aufbauelement, mit einem ein Fangmaul (4) und eine Schließschwinge (6) sowie einen Betätigungsmechanismus für die Schließschwinge aufweisenden Oberteil (1) und mit einem einen schwenkbar gelagerten Handhebel (20) aufweisenden Unterteil (17), wobei der Betätigungsmechanismus mit dem Handhebel über eine Betätigungsstange (16) verbunden ist und wobei in Schließstellung sich die Anlenkstelle (21) der Betätigungsstange (16) am Handhebel (20) bezüglich dessen Anlenkstelle (19) am Unterteil (17) in einer Übertotpunktlage befindet, dadurch gekennzeichnet, daß der Betätigungsmechanismus aus einem einerseits am Oberteil (1) im Bereich der Grundplatte (2) desselben und andererseits an der Schließschwinge (6) angelenkten Kniehebel (9) besteht, an dessen Kniegelenk die Betätigungsstange (16) angreift, wobei in der Schließstellung das Kniegelenk (9) sich in einer Übertotpunktlage befindet und an einem Anschlag (3) anliegt.

## Claim

Remote lock for the sides of transport vehicles, the sides being capable of lowering on hinges and swinging out, the lock being arranged to be secured to a fixed vehicle element and having an upper part (1) with a receiving jaw (4), a rocker latch (6) and an actuating mechanism for the rocker latch and a lower part (17) with a pivotably mounted hand lever (20), the actuating mechanism being connected with the hand lever by an actuating bar (16), wherein in the locking position the pivot point (21) of the actuating bar (16) on the hand lever (20) occupies an over-centre position with respect to the pivot point (19) of the said hand lever to the lower part (17), characterized by the fact that the actuating mechanism consists of a toggle lever (9) which is articulated on one hand to the upper part (1) in the zone of the baseplate (2) thereof and on the other hand to the rocker latch (6), the joint of the toggle lever being subject to the action of the actuating bar (16) and, in the locking position, occupying an over-center position and bearing against a stop (3).

## Revendication

Verrou à longue course de manoeuvre équipant des ridelles de véhicules fardiers pouvant être rabattues et dégagées par pivotement, ce verrou, destiné à être monté sur un élément de carrosserie fixe, comprenant une partie supérieure (1) munie d'un bec d'arrêt (4), d'un cliquet de verrouillage (6) et d'un mécanisme d'actionnement de ce cliquet de verrouillage, ainsi qu'une partie inférieure (17) présentant un élément de préhension (20) monté à pivotement, le mécanisme d'actionnement étant relié à l'élément de préhension ou levier par l'intermédiaire d'une tige d'actionnement (16) et, en position fermée, la zone d'articulation (21) de la tige d'actionnement (16) sur l'élément de préhension (20) se trouvant dans un état de dépassement du point mort par rapport à la zone d'articulation (19) dudit élément de préhension sur la partie inférieure (17), verrou caractérisé par le fait que le mécanisme d'actionnement consiste en un levier coudé (9) articulé d'une part sur la partie supérieure (1) au voisinage de la plaque de base (2) de cette dernière et d'autre part sur le cliquet de verrouillage (6), la tige d'actionnement (16) étant en prise avec l'articulation à genouillère de ce levier et, dans la position fermée, l'articulation (9) du type genouillère se trouvant dans un état de dépassement du point mort et étant appliquée contre une butée (3).